# EUROPEAN PATENT SPECIFICATION

(11) **EP 2 317 166 B1**
(45) Date of publication and mention of the grant of the patent: **19.12.2012**
(21) Application number: 10187995.5
(22) Date of filing: 19.10.2010
(51) Int. Cl.: F16C 19/52, F16C 33/72, F16C 41/00

(54) **Sensor mounting cover for a rolling-contact bearing**
Deckel mit integriertem Sensorsitz für ein Wälzlager
Couvercle de montage de capteur pour palier à roulement

(30) Priority: 21.10.2009 IT TO20090795
(43) Date of publication of application: 04.05.2011
(73) Proprietor: Aktiebolaget SKF, 415 50 Göteborg (SE)
(72) Inventor: Serafini, Andrea, I-10064, PINEROLO (Torino) (IT)
(74) Representative: Fioravanti, Corrado

(56) References cited:
- DE-T5-112006 003 635
- JP-A- 10 073 612
- US-A1- 2006 002 644
- US-A1- 2006 159 377

## Description

The present invention relates to a sensor mounting cover for a rolling-contact bearing.

In general, sensor mounting covers of the known type comprise a transverse wall and an axial projection which is joined to the transverse wall and is provided with a through-seat for housing a sensor.

The adverse environmental conditions in which some rolling-contact bearings, for example wheel hub bearings, operate may result in the infiltration of liquid inside the bearing itself also through the hole for the sensor, despite the fact that the latter may be usually fitted with a sealing ring which is compressed between the sensor and the axial projection against an inlet edge of the through-seat.

JP 10 073612 A **discloses a sensor mounting cover according to the preamble of claim 1.**

The object of the present invention is to provide a sensor mounting cover for a rolling-contact bearing, which is able to overcome in a simple and low-cost manner the drawbacks described above.

According to the present invention, there is provided a sensor mounting cover as defined in claim 1. Preferred embodiments are defined in the dependent claims.

The invention will now be described with reference to the accompanying drawings which show a non-limiting, exemplary embodiment of the invention, and in which:
- Figure 1 is a front elevation view, on a smaller scale, of a preferred embodiment of a sensor mounting cover for a rolling-contact bearing according to the present innovation;
- Figures 2 and 3 are cross-sections along the lines II-II and III-III, respectively, of Figure 1;
- Figure 4 is a detail, on a larger scale, of Figure 3; and
- Figure 5 is a view of a detail, on a larger scale, of a second preferred embodiment of the sensor mounting cover shown in Figure 1.

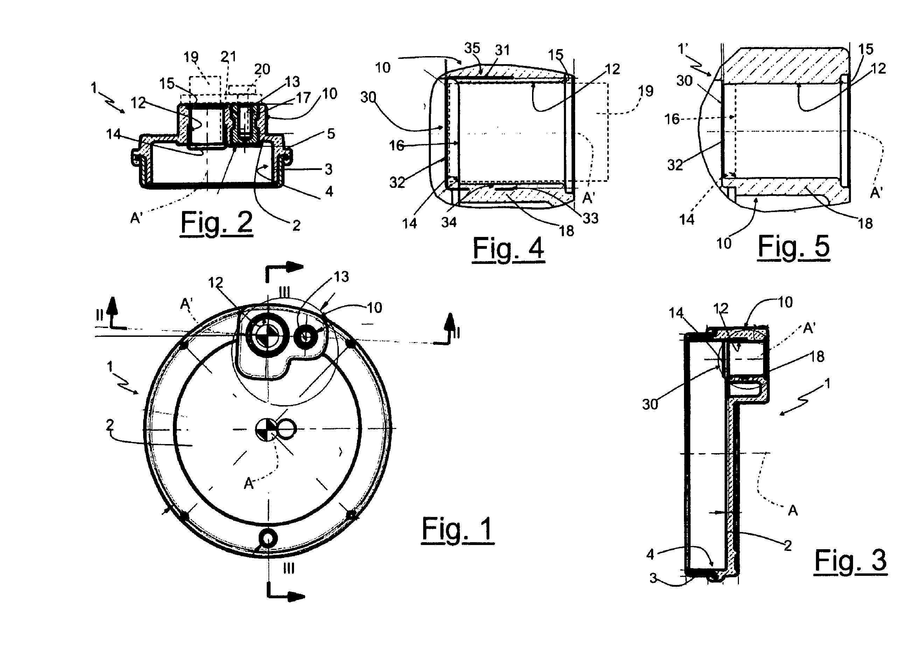

With reference to Figures 1 and 2, numeral 1 designates in its entirety a sensor mounting cover for a rolling-contact bearing of the known type, for example for a wheel hub bearing.

The cover 1 is designed to be mounted on an outer ring of the said bearing and comprises a transverse wall 2, arranged transversely with respect to an axis A, and a cylindrical wall 3, which is joined to the transverse wall 2 and, extending around the axis A, forms a recess 4 with the transverse wall 2 itself. The cylindrical wall 3 has an annular projection 5 which projects radially outwards from the wall 3 itself and defines an axial locating means for the cover 1 so as to ensure correct assembly thereof on the aforementioned bearing.

The cover 1 also comprises an axial projection 10 which extends from the wall 2 axially on the opposite side to the recess 4, namely towards the outside of the said bearing, and is arranged along the periphery of the wall 2 in an eccentric position with respect to the axis A.

The projection 10 is provided with two holes 12 and 13 which are parallel to each other and to the axis A. The hole 12 is a through-hole bounded axially towards the inside of the recess 4 by an inner edge 14 and axially on the opposite side by an inlet edge 15 defining a window or aperture 16. Instead the hole 13 houses a bush 17 which is internally threaded and is embedded inside the projection 10 during manufacture of the cover 1.

The hole 12 defines a seat suitable for housing a sensor 19 and is radially bounded by a cylindrical wall 18 which is coaxial with an axis A' parallel to the axis A and forms part of the projection 10. The sensor 19 is inserted inside the seat via the edge 15 so as to face the said bearing through the window 16 and is fixed by means of a screw 20 screwed into the bush 17 and connected to the sensor 19 by means of a tongue 21.

The wall 2 and the projection 10 are made of moulded plastic and therefore form a single body which has a sufficient overall rigidity to ensure positioning of the sensor 19 both in its own seat and with respect to the said bearing.

In accordance with what is shown in Figures 3 and 4, the cover 1 also comprises a closing lid 30 which is partially embedded inside the projection 10 so as to close the hole 12 on the side where the edge 14 is situated, i.e. so as to close the window 16 sealing definitively the recess 4 from the outside of the cover 1. The lid 30 is defined by a cup-shaped body and comprises a cylindrical lateral wall 31 having a thickness which is lesser than the thickness of the cylindrical wall 18 and is partially embedded inside the cylindrical wall 18 itself, and projects axially from the wall 18 by an amount comparable to its own thickness.

The lid 30 is made of non-magnetic, preferably metallic or plastic or textile or rubbery material, but, in any case, is always made of liquid-tight material. The choice as to the type of material may depend both on the type of application and on the type of sensor to be used as well as also, where applicable, on the type of method used to produce the cover 1.

The lid 30 also comprises a membrane or thin base 32 which is joined to the wall 31, the thickness of which is equal to that of the wall 31 and is arranged facing and parallel to the window 16 so as to separate entirely the seat from the inside of the recess 4, and therefore from the inside of the said bearing, preventing the entry of impurities into the bearing through the hole 12. The sensor 19, once inserted inside the hole 12, is arranged almost making substantial contact against the membrane 32, the composition of which in terms of material and the thickness of which do not affect correct reading of the sensor 19.

The partial embedding of the wall 31 inside the projection 10, which is very evident if the cover 1 and lid 30 are made of different materials, confers a greater rigidity to the projection 10, allowing a further improved positioning of the sensor 19. Further, since this embedding is performed during moulding of the cover 1, the embedding allows to locate the lid 30 correctly with respect to the hole 12, without any risk of incorrect positioning of the membrane 32 along the axis A', namely without any risk that the membrane 32 may interfere with the sensor 19.

In the case, instead, where the lid 30 is made of textile material, the membrane 32, while ensuring a hydrostatic seal, allowing at the same time air to pass inside the said bearing, has a flexibility such as to avoid any damage due to any contact with the sensor 19.

In order to improve fixing of the lid 30 inside the projection 10 the lateral wall 31 is provided with one or more through-holes 34 (only one of which is shown in Figure 4). The holes 34, during moulding of the cover 1, are filled with the same plastic material which forms the cover 1, thereby fixing the lateral wall 31 inside the projection 10 and thus ensuring complete integration of the lid 30 inside the cover 1.

The through-holes 34 may be replaced or supplemented with other fixing elements such as:
- a shaped edge obtained by folding radially outwards an end edge 33 of the wall 31 or, alternatively and/or at the same time:
- surface machining preferably, but not necessarily, consisting in knurling, of a radially outer surface 35 of the lateral wall 31.

Finally, if the lid 30 is to be made of plastic material and, if appropriate, the same material as the cover 1, a substantial continuity is established between the material of the lid 30 and the material of the cover 1 such that the two elements merge entirely with one another.

The embodiment which is shown in Figure 4 refers to a cover 1' which is similar to the cover 1, from which it differs mainly in that the lid 30 not only is made of the same material as that of the cover 1' , but is formed so as to be intrinsically connected to the projection 10 from which it can be distinguished solely owing to the presence of the membrane 32. In other words, in the cover 1', the projection 10 and the lid 30 are moulded using the same plastic material and the shape of both the cover 1' and the lid 30, or the membrane 32, is determined by the shape of the mould.

Compared to the cover 1, the cover 1' is even more simple to produce since the lateral wall 31 of the lid 30 and the projection 10 are substantially a single piece made of the same material, and positioning of the membrane 32 around the window 14 is obtained directly by means of the form of the mould. The membrane 32 forms with the wall 31 a single piece made of the same material and arranged facing the edge 14, or the window 16, so as to isolate entirely the seat 12 from the said bearing.

It is understood that the invention is not limited to the embodiments described and illustrated here, which are to be regarded as exemplary embodiments of the sensor mounting cover for a rolling-contact bearing, which instead may be subject to further modifications relating to shapes and arrangements of parts as well as constructional and assembly details.

## Claims

1. A sensor mounting cover (1)(1') for a rolling-contact bearing comprising a transverse wall (2) arranged transversely with respect to an axis (A), a cylindrical wall (3) joined to the transverse wall (2) extending around the axis (A) so as to form a recess (4) with the transverse wall (2), and an axial projection (10), the axial projection (10) being attached to the transverse wall (2) and being provided with a through seat (12) to house a sensor (19), the seat (12) being bounded axially by an outer inlet edge (15) for the sensor (19) and an internal edge (14) defining a window (16) to allow the sensor (19) to face said bearing; the cover (1)(1') comprising a closure element (30) joined to the axial projection (10) and placed at least around the inner edge (14) so as to close the window (16);
**characterized in that** the closure element (30) is defined by a cup-shaped body and comprises a cylindrical lateral wall (31) partially recessed into the axial projection and a membrane (32) attached to the cylindrical lateral wall (31) adjacent to the inner edge (14) so as to separate the seat completely from said bearing and prevent the ingress of impurities into said bearing, and wherein the axial projection (10) extends from the transverse wall (2) axially on the opposite side to the recess (4).

2. A cover according to claim 1, **characterized in that** the closure element (30) is made of nonmagnetic material.

3. A cover according to claim 1 or 2, **characterized in that** the closure element (30) is made of a waterproof material.

4. A cover according to claim 1 or 2 or 3, **characterized in that** the closure element (30) is made of a textile material and/or a plastic material.

5. A cover according to claim 3 or 4, **characterized in that** the closure element (30) is co-moulded at least with the axial projection (10).

6. A cover according to claim 3 or 4, **characterized in that** the closure element (30) comprises fixing means (34) to fix the lateral wall (31) into the axial projection (10).

7. A cover according to claim 5, **characterized in that** the fixing means (34) have at least one through hole (34) passing through the lateral wall (31).

8. A cover according to claim 5 or 6, **characterized in that** the cylindrical lateral wall (31) has a thickness whose dimensions are less than the dimensions of a thickness of the cylindrical wall (18) defining the seat (12), and is partially recessed into the cylindrical wall (18).

## Patentansprüche

1. Sensormontagedeckel (1) (1') für ein Wälzlager, umfassend eine Querwand (2), die quer zu einer Achse (A) angeordnet ist, eine mit der Querwand (2) verbundene zylindrische Wand (3), die sich um die Achse (A) herum erstreckt, derart, dass sie eine Aussparung (4) mit der Querwand (2) bildet, und einen axialen Vorsprung (10), wobei der axiale Vorsprung (10) an der Querwand (2) befestigt ist und mit einem Durchgangssitz (12) zur Aufnahme eines Sensors (19) versehen ist, wobei der Sitz (12) axial durch einen äußeren Einlassrand (15) für den Sensor (19) und einen inneren Rand (14) begrenzt wird, der ein Fenster (16) definiert, damit der Sensor (19) dem Lager zugekehrt ist; wobei der Deckel (1) (1') ein Verschlusselement (30) umfasst, das mit dem axialen Vorsprung (10) verbunden und mindestens um den inneren Rand (14) platziert ist, um das Fenster (16) zu schließen; **dadurch gekennzeichnet, dass** das Verschlusselement (30) durch einen schalenförmigen Körper definiert wird und eine zylindrische Seitenwand (31), die teilweise in dem axialen Vorsprung ausgespart ist, und eine Membran (32) umfasst, die an der zylindrischen Seitenwand (31) neben dem inneren Rand (14) befestigt ist, um den Sitz vollständig von dem Lager zu trennen und das Eintreten von Verunreinigungen in das Lager zu verhindern, und wobei sich der axiale Vorsprung (10) von der Querwand (2) axial auf der gegenüberliegenden Seite der Aussparung (4) erstreckt.

2. Deckel nach Anspruch 1, **dadurch gekennzeichnet, dass** das Verschlusselement (30) aus einem nichtmagnetischen Material besteht.

3. Deckel nach Anspruch 1 oder 2, **dadurch gekennzeichnet, dass** das Verschlusselement (30) aus einem wasserdichten Material besteht.

4. Deckel nach Anspruch 1, 2 oder 3, **dadurch gekennzeichnet, dass** das Verschlusselement (30) aus einem textilen Material und/oder einem Kunststoffmaterial besteht.

5. Deckel nach Anspruch 3 oder 4, **dadurch gekennzeichnet, dass** das Verschlusselement (30) mindestens zusammen mit dem axialen Vorsprung (10) geformt ist.

6. Deckel nach Anspruch 3 oder 4, **dadurch gekennzeichnet, dass** das Verschlusselement (30) Befestigungsmittel (34) zur Befestigung der Seitenwand (31) in dem axialen Vorsprung (10) umfasst.

7. Deckel nach Anspruch 5, **dadurch gekennzeichnet, dass** die Befestigungsmittel (34) mindestens ein Durchgangsloch (34) aufweisen, das durch die Seitenwand (31) verläuft.

8. Deckel nach Anspruch 5 oder 6, **dadurch gekennzeichnet, dass** die zylindrische Seitenwand (31) eine Dicke aufweist, deren Abmessungen kleiner sind als die Abmessungen einer Dicke der zylindrischen Wand (18), die den Sitz (12) definiert, und teilweise in der zylindrischen Wand (18) ausgespart ist.

## Revendications

1. Recouvrement (1), (1') de montage de détecteur pour palier de roulement à contact, comprenant
une paroi transversale (2) disposée transversalement par rapport à un axe (A),
une paroi cylindrique (3) reliée à la paroi transversale (2) et s'étendant autour de l'axe (A) de manière à former un creux (4) avec la paroi transversale (2) et
une saillie axiale (10),
la saillie axiale (10) étant reliée à la paroi transversale (2) et étant traversée par un siège (12) qui permet de loger un détecteur (19),
le siège (12) étant délimité axialement par un bord extérieur (15) d'entrée du détecteur (19) et un bord intérieur (14) qui définit une fenêtre (16) qui permet au détecteur (19) de se placer face audit palier,
le recouvrement (1), (1') comprenant un élément de fermeture (30) relié à la saillie axiale (10) et placé au moins autour du bord intérieur (14) de manière à fermer la fenêtre (16),
**caractérisé en ce que**
l'élément de fermeture (30) est défini par un corps en forme de cuvette et comprend une paroi latérale cylindrique (31) partiellement en creux dans la saillie axiale et une membrane (32) reliée à la paroi latérale cylindrique (31) en position adjacente au bord intérieur (14) de manière à séparer complètement le siège dudit palier et à empêcher la pénétration d'impuretés dans ledit palier et
**en ce que** la saillie axiale (10) déborde axialement de la paroi transversale (2) sur le côté opposé au creux (4).

2. Recouvrement selon la revendication 1, **caractérisé en ce que** l'élément de fermeture (30) est réalisé en un matériau non magnétique.

3. Recouvrement selon les revendications 1 ou 2, **caractérisé en ce que** l'élément de fermeture (30) est constitué d'un matériau étanche à l'eau.

4. Recouvrement selon les revendications 1, 2 ou 3, **caractérisé en ce que** l'élément de fermeture (30) est constitué d'un matériau textile et/ou d'une matière plastique.

5. Recouvrement selon les revendications 3 ou 4, **caractérisé en ce que** l'élément de fermeture (30) est moulé conjointement au moins avec la saillie axiale (10).

6. Recouvrement selon les revendications 3 ou 4, **caractérisé en ce que** l'élément de fermeture (30) comprend des moyens de fixation (34) qui fixent la paroi latérale (31) dans la saillie axiale (10).

7. Recouvrement selon la revendication 5, **caractérisé en ce que** les moyens de fixation (34) sont traversés par au moins un trou (34) qui traverse la paroi latérale (31).

8. Recouvrement selon les revendications 5 ou 6, **caractérisé en ce que** l'épaisseur de la paroi latérale cylindrique (31) est inférieure à l'épaisseur de la paroi cylindrique (18) qui définit le siège (12) et est partiellement en creux dans la paroi cylindrique (18).
